# EUROPEAN PATENT APPLICATION

(11) **EP 4 195 160 A1**
(43) Date of publication of application: **14.06.2023**
(21) Application number: 21853079.8
(22) Date of filing: 02.08.2021
(51) Int. Cl.: G06T 19/00, G06T 17/20, G06T 15/50

(54) **DATA OPTIMIZATION AND INTERFACE ENHANCEMENT METHOD FOR CREATING AUGMENTED REALITY OF LARGE-SCALE BUILDING IN MOBILE DEVICE**

(30) Priority: 07.08.2020 KR 20200099467
(71) Applicant: Republic of Korea (National Research Institute of Cultural Heritage), Daejeon 34122 (KR)
(72) Inventor: LEE, Kyu Hoon, Daejeon 35207 (KR); HAN, Wook, Daejeon 34121 (KR); CHOI, Hyang Seon, Daejeon 34048 (KR); KWON, Heung Soon, Daejeon 34122 (KR); KIM, Sook Kyung, Daejeon 34053 (KR); SEO, Hyo Won, Daejeon 35231 (KR); LEE, Sang Myeong, Jincheon-gun Chungcheongbuk-do 27872 (KR); SON, Eun Mi, Daejeon 34048 (KR); LEE, Sun Ah, Jeongeup-si Jeollabuk-do 56175 (KR); KIM, So Young, Daejeon 34052 (KR); LEE, Eun Bee, Daejeon 34052 (KR); HA, Tae Jin, Seoul 06694 (KR); KIM, Jong Feel, Seoul 07664 (KR); CHOI, Ju Gon, Suwon-si Gyeonggi-do 16369 (KR)
(74) Representative: Shearman, James Ward
(86) International application number: PCT/KR2021/010079
(87) International publication number: WO 2022/030918

(57) **Abstract**

The present invention makes it possible to authorize data and enhance an interface function so that an augmented reality of a large-scale ancient wooden building can be created in a device such as a mobile device having limited processing capacity, instead of large-capacity computing equipment such as a PC. The present invention relates to a data optimization and interface enhancement method for creating an augmented reality of a large-scale building in a mobile device, wherein common mesh information is used by understanding and reconfiguring the structure of the building into module units that can reuse resources, and instantiating the module units using identical mesh data, and thus not only is it possible to reduce resource usage, but a Level of Detail (LOD) technique can be used to use the data efficiently.

## Description

### [Technical Field]

The present invention relates to a data optimization and interface enhancement method for creating an augmented reality of a large-scale building in a mobile device, and specifically, to a data optimization and interface enhancement method for creating an augmented reality of a large-scale building in a mobile device to authorize data and enhance an interface function so that an augmented reality of a large-scale ancient wooden building can be created in devices such as portable mobile devices with limited processing capacity instead of large-capacity computing equipment such as PCs.

In addition, the present invention relates to a data optimization and interface enhancement method for creating an augmented reality of a large-scale building in a mobile device, in which common mesh information is used by understanding a structure of a building and reorganizing the structure into a module unit for recycling resources, and by instantiating the module unit using identical mesh data, and thus resource usage is reduced, so as to realize an augmented reality of large-capacity buildings on mobile devices.

In addition, the present invention relates to a data optimization and interface enhancement method for creating an augmented reality of a large-scale building in a mobile device to use a Level of Detail (LOD) technique so as to use the data efficiently.

### [Background Art]

An augmented reality (AR) refers to a technology for superimposing a three-dimensional (3D) virtual image on a real image or background and displays the images as a single image, and the augmented reality was first introduced to the world around 1990 when the airplane manufacturer Boeing added virtual images to the assembly process of airplanes.

The augmented reality is used in various technological fields, including architectural technology as an example.

Patent Documents 1 to 3 are examples of applying the augmented reality technology to building technology.

Patent Document 1 discloses an apparatus for providing building structure information using an augmented reality technique, which includes: a transmitting and receiving unit for receiving an image of a construction site or a building structure located at the construction site; a blueprint search unit that searches for a 3D blueprint corresponding to a building structure to be built at the construction site or the building structure located at the construction site; and an image processing unit that superimposes the searched 3D blueprint on the image of the construction site or the building structure located at the construction site by using the augmented reality technique, wherein the image processing unit resizes the searched 3D blueprint to correspond to the image of the construction site or the building structure located at the construction site.

Patent Document 2 discloses a method of outputting information about royal tomb relics using an augmented reality, in a method of displaying information about relics in a royal tomb by using an augmented reality, and includes the steps of: a) running an application for realizing the augmented reality and then executing a photographing mode; b) activating a GPS and a gyro sensor of a mobile phone, by a control device equipped with an algorithm for operating the application, in response to an access to the photographing mode by a user; c) recognizing, by the control device, information on current coordinates of the mobile phone and information on a direction to which the mobile phone is directed; d) extracting coordinates of the royal tomb closest from the coordinates of the mobile phone and additional information on the royal tomb from a database; e) extracting coordinate information and graphic information of relics located in the royal tomb from the database; f) calculating a distance between the mobile phone and central coordinates of the royal tomb based on the central coordinates of the royal tomb and the current coordinates of the mobile phone; g) extracting data of a circle having a radius as the distance, and extracting four coordinate data located in a square (due east, due west, due south and due north) among the extracted circle data; h) extracting one coordinates closest from the central coordinates of the royal tomb among the four coordinate data; i) based on the coordinates, the central coordinates of the royal tomb, and the coordinates of the mobile phone calculating an angle between the square of the mobile phone and the central coordinates of the royal tomb; j) defining a range of the relics by a maximum diameter representing a region in which a relic is located, and calculating a range angle of the relics by varying the central coordinates of the royal tomb to the range of the relic; k) detecting a rotation angle from a gyro sensor with respect to a forward direction of the central coordinates of the royal tomb and a scanning direction of the mobile phone; 1) determining whether the rotation angle is present in the range angle of the relics, to determine, when the rotation angle does not exist in the range angle of the relics as a result of the determination, that there is no intention to photograph the royal tomb and feedback to step a); m) displaying the relics corresponding to the distance and the coordinate information of the mobile phone by using the augmented reality, when rotation angle a exists in the range angle of the relics as a result of the determination in step 1), wherein the augmented reality for the relics deforms a graphic size and a display angle of the relics according to the location and direction of the mobile phone, in response to the direction and size of the actual relics.

Patent Document 3 discloses a method of displaying construction spatial information using an augmented reality in a space projected on a screen of an augmented reality equipment, which includes the steps of: selecting a location for displaying construction spatial information; recognizing a specific area in a real space shown through the screen of the augmented reality equipment at the selected location; displaying GIS information on the recognized specific area; visualizing a 3D building using building information modeling (BIM) information on the displayed GIS information; selecting a specific location on the displayed construction spatial information through the augmented reality equipment; receiving a command for the specific location; and displaying the construction spatial information according to the received command, wherein the specific instruction includes a move command to the specific location, the move command is executed when a cursor located in a center of the screen of the augmented reality equipment is placed at a specific location and then a selection command is inputted, and the select command is executed when the cursor located at the center of the screen of the augmented reality equipment is not moved for a predetermined time, when a clicker connected to the augmented reality equipment is clicked, or when a specific voice is recognized by a voice recognition device installed in the augmented reality equipment.

Various architecture-related technologies using the augmented reality have been developed as described above, however, the AR technologies are used based on the conventional location tracking scheme. The conventional location tracking scheme has an error range in unit meter in recognizing actual world coordinates using GPS coordinates, and thus a played image may not be accurately located in a surrounding environment.

In addition, since large-capacity data such as building modeling is required to pass through information processing such as data optimization process via a server for processes large-capacity information before being played on a final display device such as a mobile device, and then played on the final display device, a separate equipment is necessary, and thus it is uncomfortable in use.

For improving the above conventional problems, Patent Document 4 discloses the technology developed by the present applicant.

Patent Document 4 relates to an immersive content experience system of architectural ruins based on an augmented reality, in which a position matching technology is applied to improve an error rate through an error correction process by a complex application of a marker and a camera tracking so as to enable a user to experience an immersive content of architectural relics more realistically; 3D design image data of an accurate scale implemented based on actually measured data of the relics is augmented accurately by calculating a posture (position, rotation)by using a camera tracking technology in a mobile terminal; the problem arising when using the conventional AR technologies, that is, the problem in use of GPS coordinates, which fails to accurately match a location with the surrounding environment, thereby deteriorating the reality felt by the user, is solved; and objects and environments of the actual world are recognized through a camera, a gyroscope, and an accelerometer in a smart phone, so as to be implemented to give realism to the virtual objects.

However, since the above technology, that is, the technology for implementing the augmented reality is subject to processes of training, detection, tracking, and registration, a stable environment (frame rate) cannot be maintained when resources are used indiscriminately without efficient data management, and accordingly the experience becomes unstable.

In particular, since the mobile device is a device having a limited memory and processing power, the quality of 3D resources is required to be lowered to realize the stable augmented reality environment. When the resource quality is lowered, the user's immersion is deteriorated.

### [Disclosure]

### [Technical Problem]

The present invention is developed to solve the above problems in the related art, an object of the present invention is to provide a data optimization and interface enhancement method for creating an augmented reality of a large-scale building in a mobile device, common mesh information is used by understanding a structure of a building and reorganizing the structure into a module unit for recycling resources, and by instantiating the module unit using identical mesh data, to implement an augmented reality of a large-scale ancient wooden building in a device such as a mobile device having a limited processing capacity, so that a resource usage is reduced, and a level of detail (LOD) technology enables efficient use of data.

### [Technical Solution]

According to the data optimization and interface enhancement method for creating an augmented reality of a large-scale building in a mobile device according to the present invention to achieve the above-mentioned objects, in a data optimization and interface enhancement method in an augmented reality-based immersive content experience system on architectural relics to display information on the relics of an ancient wooden building using an augmented reality techniques, each member constituting the ancient wooden building is modularized, and the identical mesh data is instantiated.

It is desirable to reduce GPU computation by reducing draw calls and batch counts by turning a static mesh into a static object from an image of an ancient wooden building.

It is desirable to override light by baking the light with a texture from an image of an ancient wooden building.

An UV scale of a light map of a mesh, which is not used among the images of the ancient wooden building, is adjusted.

### [Advantageous Effects]

According to the data optimization and interface enhancement method for creating an augmented reality of a large-scale building in a mobile device the present invention, data is efficiently managed to stably visualize large-scale ancient wooden building on a mobile device, and the visual completion is complemented to increase immersion, so that the user can experience a satisfying augmented reality.

### [Description of Drawings]

FIG. 1 is a comparison screen before and after mesh modularization in the data optimization and interface enhancement method for creating an augmented reality of a large-scale building in a mobile device according to the present invention.
FIG. 2 is a comparison screen before and after instance in the data optimization and interface enhancement method for creating an augmented reality of a large-scale building in a mobile device according to the present invention.
FIG. 3 is a comparison screen before and after LOD in the data optimization and interface enhancement method for creating an augmented reality of a large-scale building in a mobile device according to the present invention.
FIG. 4 is a comparison screen before and after overwriting light by baking the light as a texture in the data optimization and interface enhancement method for creating an augmented reality of a large-scale building in a mobile device according to the present invention.
FIG. 5 shows a GI calculation image and a light map setting adjustment screen in the data optimization and interface enhancement method for creating an augmented reality of a large-scale building in a mobile device according to the present invention.

### [Best Mode]

### [Mode for Invention]

The present invention may be applied with various modifications and have various embodiments, and specific embodiments will be illustrated in the drawings and described in the detailed description. However, this is not intended to limit embodiments of the present invention to the specific embodiments, and it will be understood that the invention is intended to cover all modifications, equivalents, and alternatives falling within the spirit and scope without departing from the idea of the invention.

Similar reference numerals are used for similar elements in describing the drawings. In the description of the present invention, a detailed description of relevant known technology incorporated herein will be omitted when it possibly makes the subject matter of the present disclosure unclear.

According to the present invention, data is efficiently managed to stably visualize large-scale ancient wooden building on a mobile device, and the visual completion is complemented to increase immersion, so that the user can experience a satisfying augmented reality.

The data optimization and interface enhancement method for creating an augmented reality of a large-scale building in a mobile device according to the present invention is a data optimization and interface enhancement method in an augmented reality-based immersive content experience system on architectural relics to display information on the relics of an ancient wooden building using an augmented reality techniques, in which images of members constituting the ancient wooden building are modularized, and the identical mesh data is instantiated.

In other words, the ancient wooden building is constructed by combining various members, and there are members having the same configuration among the above members. The building is configured by modularizing images of the members and arranging the modularized members, thereby reducing the size of the entire image of the ancient wooden building, so that the building can be easily expressed even on mobile devices.

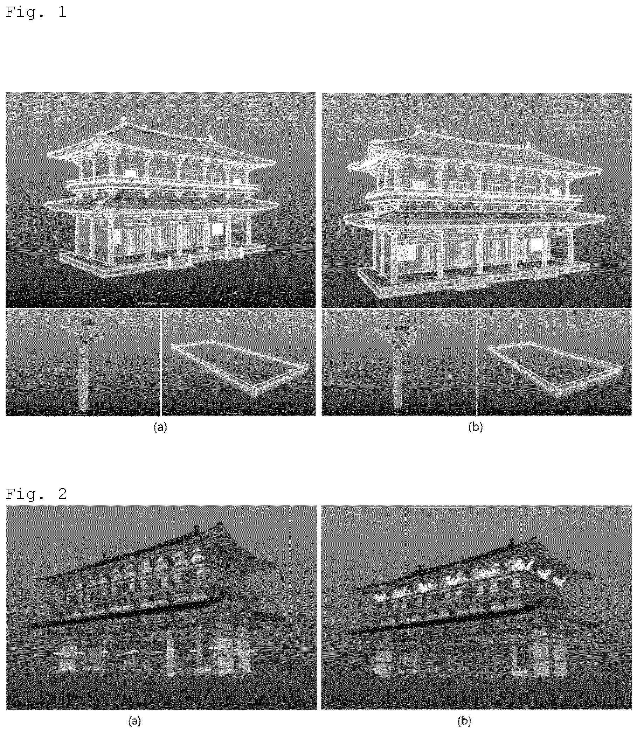

FIG. 1 show comparison screens before and after modularization of member images, and it can be seen that the entire images of the ancient wooden building look identical to each other without changes.

In addition, the same mesh data is instantiated to reduce entire data of the ancient wooden building.

FIG. 2 shows comparison screens of the entire ancient wooden buildings according to the instantiation of mesh data.

An object instance refers to grouping of objects, which have similar nature and share attributes and methods, into one group.

In addition, according to the present invention, draw calls and batch counts may be reduced by turning a static mesh into a static object from an image of an ancient wooden building, so that graphics processing unit (GPU) operations can be reduced.

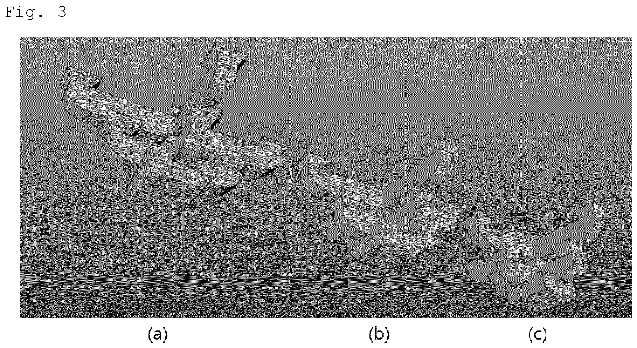

In addition, according to the present invention, as shown in FIG. 3, each member may be manufactured at 3-stage detail levels in order to apply live-on-demand (LOD), which shows a mesh having different details depending on a distance between a camera and the mesh, so that the rendering quality is increased and the amount of computation is reduced.

The LOD refers to a scheme of briefly expressing rendered images based on the idea that the distance between objects is inversely proportional to the degree of recognition. A static LOD is applied to the present invention. The static LOD refers to a scheme of calculating subset vertex data suitable for LOD stages in advance, storing the calculated subset vertex data in a data pool, and then processing subset vertex data corresponding to an LOD stage value of each terrain upon rendering, so that a space for storing data in the GPU can be ensured.

The static LOD scheme is fast due to simple computation, however, a popping phenomenon occurs because mesh steps change rapidly depending on the distance. In order to reduce the phenomenon, the curvature of the mesh at each step is adjusted so as not to exceed twice a mesh angle of the previous step, thereby reducing the popping phenomenon.

In addition, according to the present invention, light in the image of the ancient wooden building is overridden by baking the light as a texture.

When the light is baked as a texture so as to be overridden, illumination and shadow calculations, which are the heaviest factors in rendering images, may be reduced.

In general, the calculation for real-time lighting may be reduced by reflecting only direct light in a scene, but indirect light is not calculated, so it fails to create a natural light source feeling, and accordingly the quality looks deteriorated.

When a lightmap is used, the computation may be reduced. However, when effects of global illumination (GI) and ambient occlusion (AO) are added to improve the visual quality, and when the lightmap is created, the usage of texture is increased, and thus a lot of storage space are required.

Thus, it is a common practice to reduce the use of resources by deleting unused objects from the scene. However, in this case, the GI effect is not applied to the broken (baked) lightmap of surrounding meshes, and accordingly a sense of heterogeneity occurs.

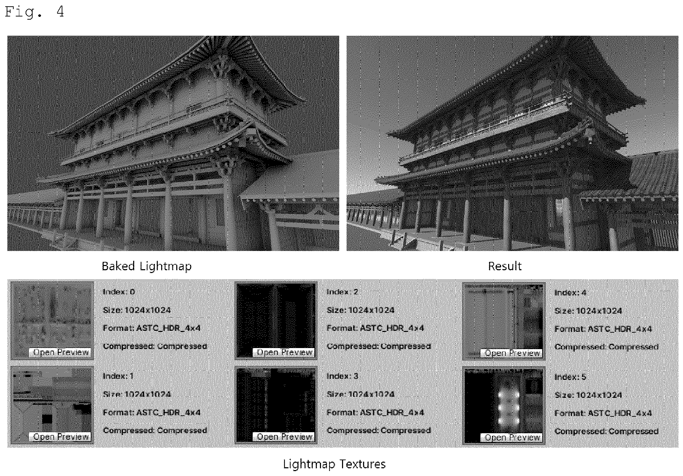

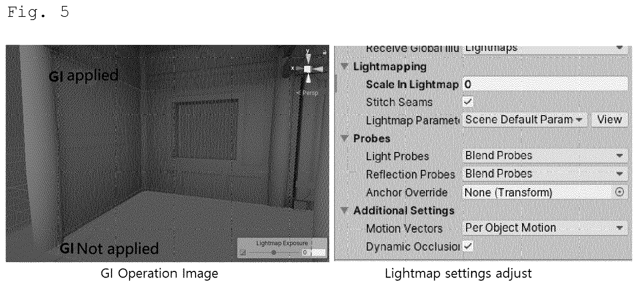

Accordingly, the UV scale of the lightmap of the unused mesh is adjusted, so that the excellent visual quality can be maintained and the memory usage can be reduced (see FIGS. 4 and 5)

## Claims

1. A data optimization and interface enhancement method for creating an augmented reality of a large-scale building in a mobile device in a data optimization and interface enhancement method in an augmented reality-based immersive content experience system on architectural relics to display information on the relics of an ancient wooden building using an augmented reality techniques, the method comprising:
modularizing each member constituting the ancient wooden building; and
instantiating identical mesh data.

2. The method of claim 1, wherein a GPU computation is reduced by reducing draw calls and batch counts by turning a static mesh into a static object from an image of the ancient wooden building.

3. The method of claim 1, wherein light in an image of the ancient wooden building is overridden by baking the light as a texture.

4. The method of claim 1, wherein an UV scale of a light map of a mesh, which is not used among images of the ancient wooden building, is adjusted.
